# EUROPEAN PATENT APPLICATION

(11) **EP 1 713 204 A1**
(43) Date of publication of application: **18.10.2006**
(21) Application number: 05759361.8
(22) Date of filing: 22.06.2005
(51) Int. Cl.: H04L 12/26

(54) **A METHOD FOR MANAGING THE USER EQUIPMENT ACCESSED TO THE NETWORK BY USING THE GENERIC AUTHENTICATION ARCHITECTURE**

(30) Priority: 28.06.2004 CN 200410060128
(71) Applicant: Huawei Technologies Co., Ltd., Longgang District, Shenzhen, Guangdong 518129 (CN)
(72) Inventor: HUANG, Yingxin Huawei Administration Building, Guangdong (CN)
(74) Representative: Mounteney, Simon James
(86) International application number: PCT/CN2005/000899
(87) International publication number: WO 2006/000152

(57) **Abstract**

The present invention discloses a method for managing user equipment (UE) to access the network by using Generic Authentication Architecture. The basic technical solution of the present invention is that after receiving a B-TID query request from a NAF, a network function which provides query information determines whether the UE is authorized to use the service in the network. If yes, the network function returns a successful query response carrying the information queried by the NAF to the NAF, and then, the NAF communicates with the UE according to the successful query response; otherwise, the network function returns a failed query response to the NAF and the NAF rejects the access from the UE. The present invention using Generic Authentication Architecture can achieve management of the UE accessing the network and prevent unauthorized users from using the services in the network, especially the visited network.

## Description

### Field of the invention

The present invention relates to the 3G radio communication technology, and more specifically, to a method for managing user equipment to access networks by using Generic Authentication Architecture.

### Background of the invention

In the 3G radio communication standards, Generic Authentication Architecture is a general framework used by a plurality of services for checking and authenticating. The service may be a multicast/broadcast service, a subscriber certificate service, an instant message service, or a proxy service.

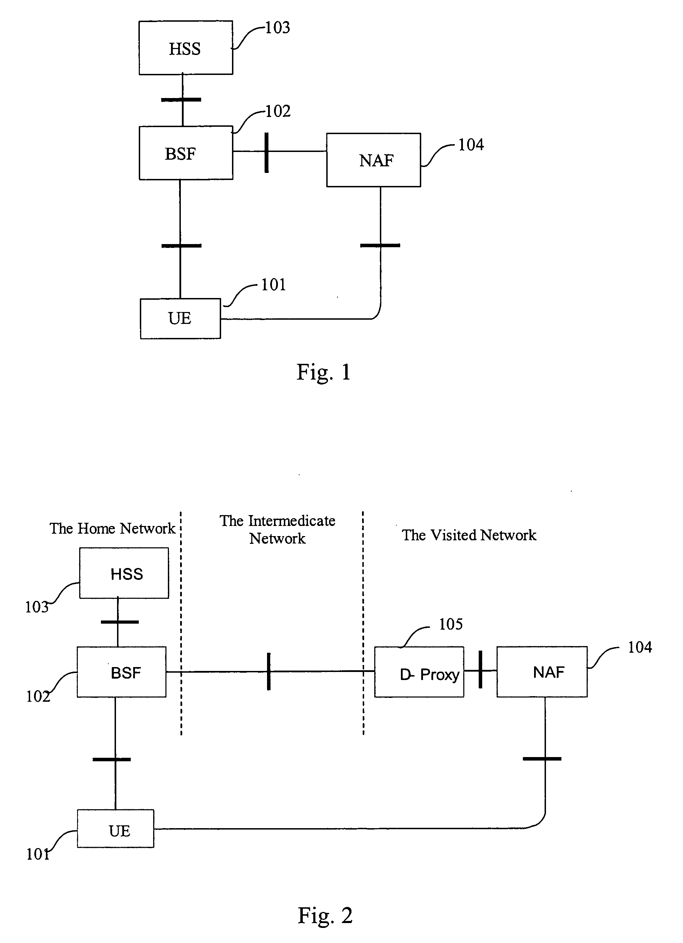

A structure of the Generic Authentication Architecture is shown in Fig. 1, in which the Generic Authentication Architecture includes user equipment (UE) 101, a Bootstrapping Server Function (BSF) 102, a Home Subscriber System (HSS) 103 and a Network Application Function (NAF) 104. The BSF 102 is provided for performing mutual authentication and generating a shared key with the UE 101. The HSS 103 is provided for saving UE Profile which indicating UE information. The HSS 103 still has function of generating authentication information. The UE Profile generally refers to some relevant information of the Generic Authentication Architecture and all applied User Security Setting (USS). Every service corresponds to an application-associated security setting, i.e., an information setting of the USS. The aggregate of all USS for one UE is called a GBA User Security Setting (GUSS).

When a UE accesses a certain service, if the UE knows that the service needs to perform mutual authentication with the BSF, the UE will communicates with the BSF and performs mutual authentication directly, otherwise, the UE communicates with the NAF corresponding to the service. If the NAF uses Generic Authentication Architecture and needs mutual authentication performed between the UE and the BSF, the NAF notifies the UE to perform authentication by using Generic Authentication Architecture; otherwise, the NAF performs another corresponding process.

The mutual authentication between the UE and the BSF is described hereinafter. After having received the authentication request from the UE, the BSF obtains the UE authentication information from the HSS, and then performs mutual authentication with the UE by executing Authentication and Key Agreement (AKA) according to the obtained authentication information. After having been authenticated successfully, the UE and the BSF generate a shared key Ks therebetween. Then, the BSF allocates a Bootstrapping Transaction Identifier (B-TID) which is relevant to the Ks to the UE.

After receiving the B-TID, the UE resends a request carrying the B-TID to the NAF, and calculates the derived key Ks_NAF according to the Ks. After receiving the request, the NAF queries the B-TID carried by the UE in local. If the NAF cannot find out the B-TID local, the NAF will send a query request to the BSF, and this query request carries the NAF identifier and the B-TID. If the BSF cannot find out the B-TID local, the BSF will notify the NAF that the UE information does not exist. In such a case, the NAF will notify the UE to perform authentication with the BSF. If the BSF finds out the B-TID, the BSF will calculate the Ks_NAF using the same algorithm that is used by the UE for calculating the derived key Ks_NAF, and then send a successful response message which carries the B-TID needed by the NAF, the derived key Ks_NAF corresponding to the B-TID and the valid time of the Ks_NAF set by the BSF to the NAF. After receiving the successful response message, the NAF regards the UE as a legal UE authenticated by the BSF and shares the Ks_NAF with the UE. The subsequent communication process between the NAF and the UE is protected by the Ks_NAF.

Fig. 2 is a structure of the Generic Authentication Architecture showing that the UE accesses a visited network service. Fig. 2 is of similar structure with Fig. 1 except for an additional Diameter Proxy (D-Proxy) 105. The D-Proxy may be a BSF in the visited network or a special proxy server in the visited network. All NAFs in the visited network are connected with the D-Proxy instead of being connected directly with the BSF in the home network. The home network is connected with the visited network through other networks such as a Virtual Private Network (VPN) and so on. A roaming UE still needs to perform authentication with the home network BSF when the UE accesses a service of the visited network. The authentication process is identical to the process when the UE is in the home network.

After having been performed mutual authentication with the home network BSF and obtained the B-TID and the relevant key information, the UE sends a service request which carries the B-TID to the visited network NAF. The visited network NAF receives the request and sends a query request which carries the B-TID to the D-Proxy. The D-Proxy receives the query request. After the NAF is authenticated successfully, the D-Proxy obtains information of the home network according to the B-TID of the UE, and sends a request message which contains the query request to the home network BSF. The request message carries the B-TID and the NAF identifier of the NAF initiating the query request so as to the BSF can calculates the Ks_NAF. The request message should also indicate that the NAF is authenticated and credible. After receiving the request message and finding out the B-TID, the home network BSF returns a successful response message which carries the B-TID, the Ks_NAF corresponding to the B-TID, etc., to the D-Proxy. The D-Proxy relays the successful response message to the NAF which sent the query request. The UE and the NAF can carry out service communication in safety under protection of the Ks_NAF.

It is shown from the above process of accessing networks that, for the UE using the Generic Authentication Architecture, only how to utilize the services in the home network and/or visited network for the UE being using the Generic Authentication Architecture is specified in the existing protocols, but no method is specified for managing the UE to access networks by using the Generic Authentication Architecture, that is, the existing Generic Authentication Architecture can only authenticate the UE being using a service to determine if it is legal, but can not determine if the UE is authorized to utilize the requested service. And it is unable to control the network service utilizing conditions of the UE when the UE accesses either the home network or the visited network.

### Summary of the invention

In view of the above, the object of the present invention is to provide a method for managing user equipment to access network by using Generic Authentication Architecture, so as to control the UE network service utilizing conditions.

To achieve the above object, the technical solution in accordance with this invention is implemented as follows:

A method for managing UE to access networks by using Generic Authentication Architecture includes steps as follows. Upon receiving a service request which carries a B-TID from an authenticated UE, a NAF sends a query request to a network function that provides query information. The network function receives the query request from the NAF, determines whether the UE initiating the service request is authorized to use the network service, if yes, the network function returns a successful query response including information to be needed by the NAF, and then the NAF controls the communication with the UE according to the information received from the network function; otherwise, the network function returns a failed query response to the NAF and the NAF rejects the access of the UE.

Preferably, the UE initiating the service request which carries the B-TID belongs to a home network and the NAF belongs to a visited network. The network function uses a D-Proxy of the NAF's network to receive the query request from the visited NAF and send a successful query response or a failed query response to the visited NAF.

The network function determining whether the UE initiating the service request is authorized to use the network service includes that the network function determines whether there are inter-network agreements and service agreements or, determines whether the UE is authorized to use the service according to a UE profile information, a list for indicating the UE credibility and/or authorizations, or any combination of the above; if there are inter-network agreements and service agreements and the UE is authorized to use the service, the UE can use the service in the visited network; otherwise, the UE can't use the service in the visited network.

The method further includes that before the D-Proxy in the visited network relays the query request, the D-Proxy determines whether the UE can use the service in the visited network, if yes, the D-Proxy relays the query request to the network function, otherwise, the D-Proxy returns a reject access message to the NAF to indicate that the service is not allowed to the UE.

Preferably, the reject access message carries a value of failure cause.

The D-Proxy determining whether the UE can use the service in the visited network includes that the D-Proxy determines whether there are inter-network agreements and service agreements between the visited network and the home network, if yes, the UE can use the service in the visited network, otherwise, the UE cannot use the service in the visited network.

The method further includes that after the D-Proxy determines that there are inter-network agreements and service agreements between the visited network and the home network, the D-Proxy determines whether the NAF is currently able to provide a service to the UE, if yes, the UE can use the service in the visited network, otherwise, the UE cannot use the service in the visited network.

Preferably, the failed query response includes a value of failure cause.

Preferably, the network function that provides the query information includes: a home network BSF or, a logical function including a BSF in the home network and a gateway function between the home network and the visited network.

Preferably, the UE belongs to a certain home network, and the NAF belongs to the same home network. The network function that provides the queried information receives the query request directly from the NAF and returns the successful query response or the failed query response directly to the NAF.

Preferably, the network function determining whether the UE is authorized to use the network service includes that the network function determines whether there are service agreements for the service in the UE home network or, determines whether the UE is authorized to use the service in the home network according to the UE profile information, the list for indicating UE credibility and/or authorizations, or any combination of the above; if there are service agreements and the UE is authorized to use the service in the home network, the UE can use the service in the home network; otherwise, the UE can't use the service in the home network.

Preferably, the failed query response that the network function returns directly to the NAF in the home network carries the value of failure cause.

Preferably, the network function that provides the query information is a BSF that belongs to the home network.

The basic technical solution of the present invention is described hereinafter. After receiving the B-TID query request from the NAF, the network function which is able to provide the query information determines whether the UE requesting for accessing the network is authorized to use the service in the network. If yes, the network function returns a successful query response carrying the information queried by the NAF to the NAF, and then, the NAF communicates with the UE according to the successful query response; otherwise, the network function returns a failed query response to the NAF, and the NAF rejects the access action from the UE.

The present invention provides a method for managing user equipment to access networks using Generic Authentication Architecture so that the home network is able to control the network service utilizing conditions of the UE and avoids the cases in which unauthorized UE using the network services. Moreover, the visited network is also able to check whether the UE is authorized to use its service so that the visited network is also able to obtain better control and management to its own services. At the same time, because the returned failed query response carries the value of failure cause, proper operations can be carried out according to the failure cause, which helps avoiding consumption of network resources resulting from attempts in vain.

### Brief description of the drawings

Fig. 1 is a schematic diagram illustrating a structure of Generic Authentication Architecture;
Fig. 2 is a schematic diagram illustrating a structure of the Generic Authentication Architecture when a UE uses a visited network service; and
Fig. 3 is a flowchart illustrating a preferred embodiment of the present invention.

### Detailed Description of the Invention

In order to make the technical solution of the present invention more explicit, the present invention will be described in detail hereinafter with reference to the accompanying drawings.

After receiving a B-TID query request from a NAF, a network function which is able to provide the query information determines whether the UE requesting to accessing the network is authorized to use the service in the network. If yes, the network function returns a successful query response carrying the information queried by the NAF to the NAF, and then, the NAF communicates with the UE according to the successful query response; otherwise, the network function returns a failed query response to the NAF, and the NAF rejects the access from the UE.

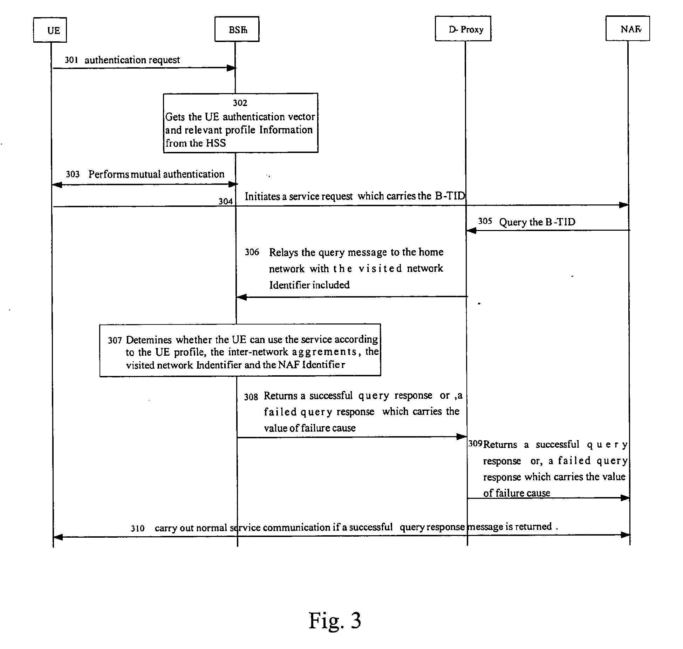

Referring to Fig. 3, in this embodiment, a roaming UE intends to use a service in a visited network. As shown in Fig. 3, BSFₕ in the chart denotes a home network BSF, and NAFᵥ denotes a visited network NAF. Detailed description about the flow chart of the present embodiment now is given as follows.

Steps 301~303, when the roaming UE intends to use a service in the visited network, the UE sends an authentication request to the home network BSF. Upon reception of the authentication request, the home network BSF sends a request to a HSS for getting a UE authentication vector and relevant Profile information. Subsequently, the BSF performs mutual authentication with the UE. The BSF and the UE share a shared key Ks therebetween after being successful authenticated. At the same time, the UE gets the B-TID allocated by the BSF.

It should be noted that if the UE has already got the B-TID in advance, it can skip the above steps and starts from Step 304 directly.

Steps 304 ~ 305, the UE sends a service request carrying the B-TID to the visited network NAF which is denoted with NAFv. Upon reception of the service request, the visited network NAF sends a query request to a diameter proxy (D-Proxy) in the visited network. The query request carries a NAF identifier and the B-TID.

Step 306, the D-Proxy carries out one of the two processing ways as follows after it successfully verifies the NAF identifier:
The D-Proxy sends a relaying message carrying the query request and a visited network ID to the home network BSF which is denoted with BSFₕ, and then proceeds with the succeeding steps; or,
The D-Proxy checks whether the UE initiating the service request is authorized to use the requested service; if yes, the D-Proxy sends a relaying message carrying the query request and a visited network ID to the home network BSF, and then proceeds with the succeeding steps; if the UE is not authorized to use the service, the D-Proxy sends a failed query response to the NAF instead of sending the query message to the home network BSF. The failed query response carries value of failure cause. After receiving the failed query response, the NAF rejects the access of the UE and terminates the process.

The checks mentioned above include following procedures. The D-Proxy determines if there are inter-network agreements and service agreements between the home network and the visited network. If yes, the D-Proxy passes the check and goes on the procedure, otherwise, the UE initiating the service request cannot use the requested service. If there are inter-network agreements and service agreements between the home network and the visited network, the step that the D-Proxy checks whether the UE initiating the service request is authorized to use the requested service may further include following procedures. The D-Proxy checks if the NAF that the UE sends request to is currently able to provide a service to the UE. For example, if the requested service is special and only provides to the UE in local of the visited network, or, the NAF is currently busy and provides service to the UE in local of the visited network with priority, the D-Proxy determines the NAF that the UE sends request to is unable to provide a service to the UE. If the D-Proxy determines the NAF that the UE sends request to is able to provide service to the UE currently, the UE is authorized to use the service; otherwise, the UE is not authorized to use the service.

The advantage of the D-Proxy carrying out the above checks is that the visited network is also able to check if the UE is authorized to use its service, so that the visited network can obtain better control and management to its own services.

Steps 307 ~ 308, After having received the query message from the D-Proxy, the BSFₕ extracts the B-TID to be queried, the visited network identifier and the NAF identifier, and then checks if there are inter-network agreements and service agreements between the home network and the visited network. Generally, the BSFₕ determines if the UE is authorized to use the service in the visited network by checking the UE specific Profile, i.e., the specific contents in the USS, or by checking a list such as a black list that is used to indicate the UE credibility and/or authority, or by any combination of the above. Only after passing the check, the BSFₕ calculates the derived key Ks-NAF according to the B-TID found locally and the shared Ks, and then, returns a successful query response to the D-Proxy. The successful query response carries the B-TID and the Ks-NAF corresponding to the B-TID. Moreover, the BSFₕ might also return the USS or a part of the USS that the service requires according to the operator's policy configured at the BSF so as to the NAF can use the USS.

If one or more items fail to pass the above checks (the specific items and number of the items to be checked are decided by the operator according to preconfigured policy), the BSFₕ returns a failed query response which carries the value of failure causes to the D-Proxy. The failure causes may include causes as follows. There are no relevant service agreements between the home network and the visited network, or there are service agreements between the home network and the visited network, but they do not include the service requested by the UE, or the service that the UE requested is not supported although there are service agreements between the network and the visited network, or the UE is not authorized to use the service although there are service agreements between the network and the visited network, or the B-TID belongs to the UE is invalid, or any combination of the above. The failed query response which carries value of failure cause is for the purpose that the UE can directly carry out proper operations according to the failure cause after it receives the failure message, so as to avoid consumption of network resources resulting from attempts in vain.

The agreements and the check policy between the home network and the visited network can be preconfigured in the BSF, or be downloaded by the BSFₕ from the HSS.

Step 309, the D-Proxy relays a successful query response or a failed query response to the NAF that initiated the query request. If the NAF receives the failed query response, the NAF sends a reject message carrying the value of failure cause to the UE to indicate that the UE is unable to use the service, i.e., the UE is rejected to access the network. And then, the NAF terminates the process.

The NAF performs Step 310 when receives the successful query response.

Step 310, The NAF communicates with the UE under protection of the key of Ks_NAF.

As mentioned above, the BSFₕ may be regarded as a network function that can provide query information. Of course, the network function that can provide query information also may be a logic function including the BSF in the home network and a gateway function. The home network connects with the visited network through the gateway function. The gateway function may be a function which already exists in the existing networks, or a proxy function that is independently set up.

If the network function that can provide query information is a logic function including the home network BSF and gateway function, the network function carries out check operation after receiving query request from the D-Proxy, for instance, checks whether there are inter-network agreements and service agreements between the UE's home network and the visited network. If a result of the check is successful, the gateway function relays the query request message to the BSF, and the BSF proceeds with the succeeding steps such as searching the B-TID, generating key information, and so on. If a result of the check is failing, the gateway function can directly return a failed query response carrying the value of failure cause as well to the D-Proxy. If the gateway function needs to achieve its check functions on the UE, the relevant information, such as the B-TID and the UE identifier, should be preconfigured in the gateway function. Therefore, the gateway function can get true identification of the UE so as to facilitate acquiring the UE Profile information. The advantage of using the gateway function for accomplishing the check operation is that the load of the BSF can be reduced.

Though the above implementing examples are for the UE that uses a service in the visited network, the control mechanism is also applicable when the NAF locates in the home network. In this case, the BSF needs not to check the inter-network agreements because the BSF and the NAF are both in the home network. But other contents can still be checked according to the operator's policy. Additionally, the BSF can communicate with the NAF in the home network directly without any other intermediate functions.

The above description is just the preferred embodiments of this invention and not to be construed as limiting to the protection scope thereof. Any modifications and equivalent arrangements will be included within the spirit and scope of the present invention.

## Claims

1. A method for managing user equipment (UE) to access networks by using Generic Authentication Architecture, comprising:
upon receiving a service request which carries a Bootstrapping Transaction Identifier (B-TID) from an authenticated UE, a Network Application Function (NAF) sending a query request to a network function that provides query information;
the network function receiving the query request from the NAF, determining whether the UE initiating the service request is authorized to use the network service, if yes, the network function returning a successful query response including information to be needed by the NAF, then the NAF controlling the communication with the UE according to the information received from the network function; otherwise, the network function returning a failed query response to the NAF and the NAF rejecting access of the UE.

2. A method according to Claim1, wherein the UE initiating the service request which carries the B-TID belongs to a home network; the NAF belongs to a visited network;
wherein the network function uses a Diameter Proxy (D-Proxy) of the NAF's network to receive the query request from the visited NAF and send the successful query response or the failed query response to the visited NAF.

3. A method according to Claim 2, wherein the network function determining whether the UE initiating the service request is authorized to use the network service comprises: the network function determining whether there are inter-network agreements and service agreements, or determining whether the UE is authorized to use the service according to UE profile information, a list for indicating the UE credibility and/or authorizations, or any combination of the above; if there are inter-network agreements and service agreements and the UE is authorized to use the service, the UE can use the service in the visited network; otherwise, the UE can't use the service in the visited network.

4. A method according to Claim 2, further comprising: before the step of the D-Proxy in the visited network relaying the query request, the D-Proxy determining whether the UE can use the service in the visited network, if yes, the D-Proxy relaying the query request to the network function, otherwise, the D-Proxy returning a reject access message to the NAF to indicate that the service is not allowed to the UE.

5. A method according to Claim 4, wherein the reject access message carries a value of failure cause.

6. A method according to Claim 4, wherein the D-Proxy determining whether the UE can use the service in the visited network comprises: the D-Proxy determining whether there are inter-network agreements and service agreements between the visited network and the home network, if yes, the UE can use the service in the visited network, otherwise, the UE cannot use the service in the visited network.

7. A method according to Claim 6, further comprising: after the step of the D-Proxy determining that there are inter-network agreements and service agreements between the visited network and the home network, the D-Proxy determining whether the NAF is currently able to provide a service to the UE, if yes, the UE can use the service in the visited network, otherwise, the UE cannot use the service in the visited network.

8. A method according to Claim 2, wherein the failed query response includes a value of failure cause.

9. A method according to Claim 2, wherein the network function that provides the query information comprises: a home network Bootstrapping Server Function (BSF) or, a logical function comprising a BSF in the home network and a gateway function between the home network and the visited network.

10. A method according to Claim 1, wherein the UE belongs to a certain home network and the NAF belongs to the same home network; the network function that provides the queried information receives the query request directly from the NAF and returns the successful query response or the failed query response directly to the NAF.

11. A method according to Claim 10, wherein the step of the network function determining whether the UE is authorized to use the network service comprises: the network function determining whether there are service agreements for the service in the UE home network or, determining whether the UE is authorized to use the service in the home network according to the UE profile information, the list for indicating UE credibility and/or authorizations, or any combination of the above; if there are service agreements and the UE is authorized to use the service in the home network, the UE can use the service in the home network; otherwise, the UE can't use the service in the home network.

12. A method according to Claim 10, wherein the failed query response that the network function returns directly to the NAF in the home network carries the value of failure cause.

13. A method according to Claim 10, wherein the network function that provides the query information is a BSF that belongs to the home network.
